# EUROPEAN PATENT SPECIFICATION

(11) **EP 2 887 232 B1**
(45) Date of publication and mention of the grant of the patent: **16.12.2015**
(21) Application number: 13197938.7
(22) Date of filing: 18.12.2013
(51) Int. Cl.: H04L 29/06, G06F 17/30, H04L 29/08

(54) **Computer implemented method for universal plug-and-play content retrieval**
Computerimplementiertes Verfahren zur universellen Plug-and-Play-Informationsabfrage
Procédé informatique pour l'extraction de contenu prêt à l'emploi universel

(43) Date of publication of application: 24.06.2015
(73) Proprietor: Advanced Digital Broadcast S.A., 1292 Geneva (CH)
(72) Inventor: PAJAK, Pawel, 65-119 Zielona Gora (PL)
(74) Representative: Blonski, Pawel

(56) References cited:
- WO-A1-2005/069169
- US-A1- 2005 138 193

## Description

The present invention relates to computer implemented method for universal plug-and-play content retrieval.

Universal plug-and-play (UPnP) is a set of networking protocols that permits networked devices, such as personal computers, printers, Internet gateways, Wi-Fi access points and mobile devices to seamlessly discover each other's presence on the network and establish functional network services for data sharing, communications, and entertainment. UPnP is intended primarily for residential networks without enterprise-class devices (see Wikipedia - wikipedia.org).

UPnP defines a service of Content Directory (CDS), which provides a uniform mechanism for browsing the content on the server and for obtaining detailed information about individual content objects.

Many devices implement CDS in order to share media content metadata with other devices in the same UPnP network. The main command used for this purpose is the Browse command. This action allows the caller to incrementally browse the native hierarchy of the Content Directory objects exposed by the Content Directory Service, including information listing the classes of objects available in any particular object container. A client device, in order to display content to the end-user, may send a Browse request to a server. For example, it requests the server for a subset of elements (eg. 10 elements starting at 30th position") and the server responds.

Besides the Browse action, the server, whenever new object is added, removed or changed sends an update information to the client. The server keeps a special counter named SystemUpdateld, which is incremented whenever a change occurs (If two respones have the same SystemUpdateld value, it means that they both were generated on the same data set). The media server includes the SystemUpdateld value in each response to the Browse request in order to inform the requesting client regarding the version of data the response applies to.

In DLNA (Digital Living Network Alliance) Guidelines (Volume 1: Architectures and Protocols - An Industry Guide for Building Interoperable Platforms, Devices, and Applications) it is defined that a UPnP AV MediaServer device may reduce the number of CDS objects (<item> and <container> elements) in a response to a CDS:Browse or CDS:Search for the following scenarios only: (a) the transmission of a SOAP response with a huge byte length (>204,800 bytes) or (b) the transmission of a SOAP response that exceeds 30 seconds for the transmission time.

Therefore, the server that is requested to return a set of items does not have to return the requested items. The reason for permitting such behavior is to allow UPnP AV MediaServer implementations to comply with other guidelines: Section 7.2.15 DDC UPnP SOAP Packet Size and Section 7.2.9 DDC UPnP Device Responsiveness. This approach however, results in a difficulty of acquiring all items from a CDS service.

It would be thus desirable to provide an improved method computer implemented method for universal plug-and-play content retrieval. In particular such improved method improves the efficiency of acquiring all items from a CDS service.

Prior art document US 2005/0138193 by Microsoft, published on 23 June 2005, discloses a UPnP network comprising content retrieval and a resource sharing service.

The object of the present invention is a computer implemented method for universal plug-and-play content retrieval, the method comprising the steps of: addressing a media server, the media server comprising content items for sharing; receiving, from the media server, information regarding content items count available for retrieval; dividing the content items count available for retrieval into non-overlapping, sequential subranges of items; and iteratively retrieving all of the non-overlapping, sequential subranges of content items starting from the subrange located at the end of a list of media server's content items, according to such an order that each new content item, added to the list of media server's content items, appears at the end of that list.

Preferably, the sorting is executed by means of a unique item identifier, the identifier being automatically incremented with addition of an item to the database.

Preferably the method further comprises a step of merging the results of the iteratively retrieved the non-overlapping, sequential subranges.

Preferably, during iteratively retrieving the non-overlapping, sequential subranges, retrieving update notification (204) from the media server.

Preferably, the method further comprises a step of merging (205) the results of the iteratively retrieved the non-overlapping, sequential subranges and update notifications retrieved from the media server.

Another object of the present invention is a computer program comprising program code means for performing all the steps of the method according to the present invention when said program is run on a computer.

Another object of the present invention is a computer readable medium storing computer-executable instructions performing all the steps of the method according to the present invention when executed on a computer.

The present invention is shown by means of exemplary embodiments on a drawing, in which:
Fig. 1 presents a schematic diagram of a prior art method; and
Fig. 2 presents a schematic diagram of a method according to the present invention.

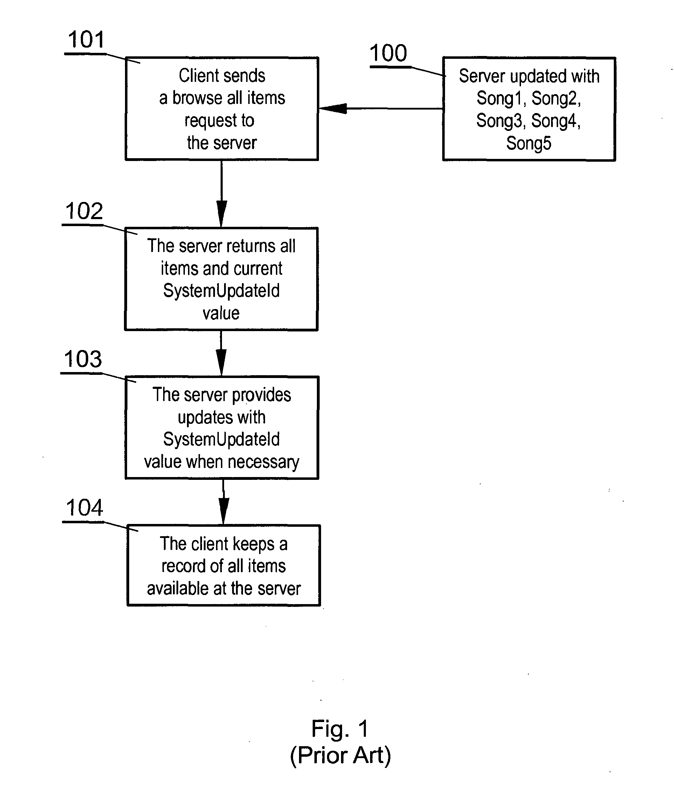

Fig. 1 presents a schematic diagram of a prior art method. The process starts at step 100, where a server is updated with content items in a given directory, for example five audio files: Song1, Song2, Song3, Song4 and Song5. The server will then share these content items via the UPnP sharing mechanism. Subsequently, at step 101, a client sends a browse all items request to the server. Next, at step 102, the server returns, up to, all items (subject to a constraint that the server does not have to return all the requested items but only a subset) and current SystemUpdateld value, for example 7. This means that any subsequent server's response, having SystemUpdateld value greater than 7, will be taken into account by this particular client as relevant. Subsequently, at step 103, the server provides updates, with SystemUpdateld value, when necessary. The final step 104 is for the client to keep a record of all items available at the server by applying required updates.

An exemplary update would for example be a message from the server notifying that the Song2 is removed and the SystemUpdateld value is changed to 8. The client will compare the SystemUpdateld value with the state of its content and update items if necessary.

An exemplary implementation of Fig. 1 in a client device may be defined in pseudocode as follows:

```
 result ← Ø
 current_index ← 0
 current_update_id ← 0
 while true do
 <partial_result, number_returned,
 total_matches, update_id> ← browse (current_index, 0)
  if current_index = 0 then //first browse
   result ← partial_result
   current_index ← number_returned
   current_update_id ← update_id
 else
   if update_id = current_update_id then
     result ← result + partial_result
     current_index ← current_index + number_returned
   else //inconsistency, restarting
     result ← Ø
     current_index ← 0
  if current_index >= total_matches then
 return result
```

The browse function in the above pseudocode refers to a simplification of a UPnP Browse process. Such UPnP Browse wherein function browse
Browse(starting_index, requested_count)
returns <result, number_returned, total_matches, update_id>
where:
result - a list of items
number_returned - the number of elements in the returned result
total_matches - the total number of elements in a container
update_id - SystemUpdatelD field value while generating response

The above pseudocode includes also coverage of a situation where a server may return fewer than all shared items. In such cases the list, at the client terminal, will be incomplete in prior art systems and the data retrieval must restart.

The problem of the above solution is that it is not efficient in cases where the list of shared items is constantly changing (eg. Songs on a UPnP server). Therefore, the procedure above can never end, because it restarts upon every update.

For example, a UPnP server may share a set of content items that may comprise 10000 items. Typically a server will return only few hundreds of items. This is due to the fact that a UPnP server has a set maximum size, in bytes, of UPnP device or service description document to download. This is 204800 bytes.

A process of obtaining 10000 items will thus require 100 queries, which in case of 1 second per query will result in 1 minute 40 seconds. However, the items list is constantly changing and the value of SystemUpdateld is changing as well. This in turn means that the client must restart items acquisition process resulting in increased workload for both the client and the media server. In fact the prior art process may never reach its end in case of a frequently updated items list.

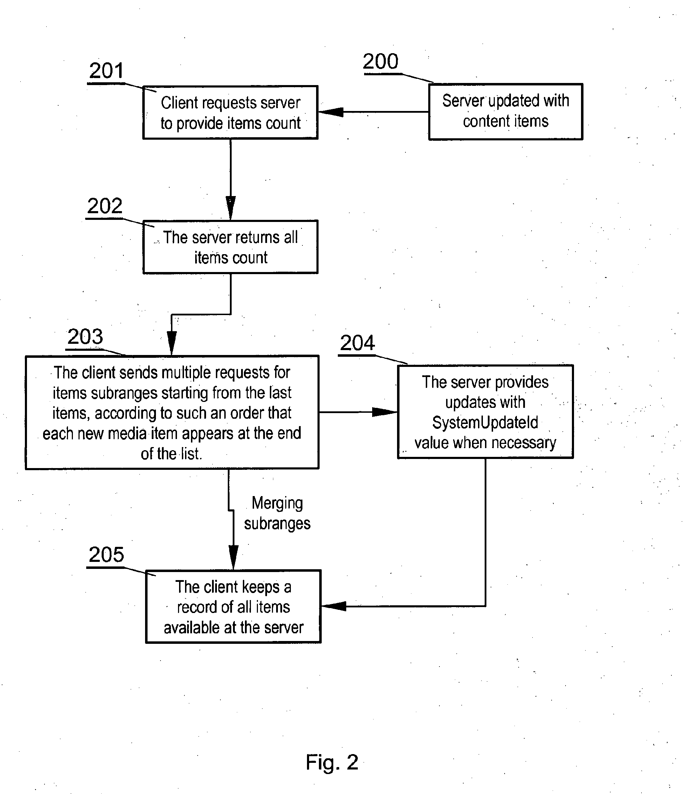

Fig. 2 presents a schematic diagram of a method according to the present invention.

The process starts with finding (addressing) a media server in a given state where it most likely comprises some content items for sharing 200. For example, the available media items include Song1, Song2, Song3, and Song4. Next, at step 201, the client learns that the server currently has 4 items i.e. 4 items are available for retrieval.

Subsequently, at step 202, the client sends to the media server a request for items 3 and 4 i.e. starting with a subrange located at the end of the list. In response the server provides to the client the items Song3 and Song4.

Prior to requesting a subrange of items from the media server, the client terminal divides the items count available for retrieval into non-overlapping, sequential subranges of items in order to iteratively retrieve all of the non-overlapping, sequential subranges of items starting from the subrange located at the end of the list.

For example, a range of 1 to 8 may be divided into four subranges of (1, 2), (3, 4), (5, 6) and (7, 8). The order of retrieval will be in such a case as follows (7, 8), (5, 6), (3, 4) and lastly (1, 2). Thus, all of the non-overlapping, sequential subranges being retrieved starting from the subrange located at the end of the list. In case new content items (eg. (9, 10)) arrive at the server eg. After the client retrieved items (7, 8), the client will still proceed to (5, 6) subrange (according to the division into non-overlapping, sequential subranges) since (9, 10) will be notified to the client terminal separately by the media server (see step 204).

The request of the client terminal (typically each request) shall set the media server to a sorting mode such that new media items will be added at the end of the list. Sorting is present in some UPnP servers that implement optional property "upnp:objectUpdateID" on each item. It is also very easy to implement for media servers that internally use items database - it could be simply a unique item identifier which is automatically incremented with addition of an item to the database.

Prior to sending any items to the client, the media server will sort its shared items according to the client's request.

While retrieving results from step 203 an update may occur at the media server at step 204. The client shall be monitoring such updates. For example a Song5 is added and the server sends appropriate update notification to clients. In the meantime the client requests at step 203, the remaining non-overlapping, sequential subrange comprising items Song1 and Song2. It is to be noted that there may be more subranges than two as in the present example depending on the total number of items to be retrieved from the server.

While requesting results from step 203, second subrange, an update may occur at the server at step 204. For example Song2 is removed. In such case the server will return items Song1 and Song3 instead of Song1 and Song2, because the request related to the first two items and Song2 has been removed.

At step 205, the client merges all results i.e. [Song3, Song4] + [Song1, Song3] into [Song1, Song3, Song4] and applies all queued updates meaning that in the present example the client adds Song5 and skips removal of Song2 as it is not present in the merged list. At this time the client has the whole list synchronized and will keep it synchronized using future updates communicated from the server.

The above method may be further enhanced with a step of checking whether a clients request for a subrange of items at step 203 matches the response i.e. whether the number of returned items matches the number of the requested items.

An exemplary implementation of Fig. 2 in a client device may be defined in pseudocode as follows:

```
 result ← Ø
 current_index ← GET_CONTAINER_CHILD_COUNT()
 while current_index > 0 do
   requested_count ← MIN(current_index,
                                 ESTIMATE_REQUESTED_COUNT ())
   current_index ← current_index - requested_count
   interval_result ← BROWSE-INTERVAL(current_index,
                                            requested_count)
   result ← result + interval_result
   current_index ← current_index + (requested_count -
   SIZE (interval_result))
   result ← UNIQUE (result)
   return
```

The ESTIMATE_REQUESTED_COUNT() is a function that returns a number of items that will always be returned by the server i.e. the minimum number of items returned. The value may be media server dependent and predefined, and its specific value only affects the number of queries sent to the server.

The function BROWSE-INTERVAL (starting_index, requested_count) returns the entire interval [starting_index, starting_index + requested_count) if the server is able to return items in this range in a single query.

Otherwise, the function BROWSE-INTERVAL executes the query to the server and returns whole interval [starting_index, starting_index + requested_count) if the data has not changed during subsequent polling intervals, or the BROWSE INTERVAL rejects partial results and return the suffix interval [starting_index, starting_index + requested_count) - If the data is changed.

An exemplary implementation of the function BROWSE-INTERVAL may be defined in pseudocode as follows:

```
 BROWSE-INTERVAL(starting_index, requested_count)
 <partial_result, number_returned, total_matches, update_id> ←
   browse(starting_index, requested_count)
 if number_returned = requested_count then
   return partial_result
 else
   result ← partial_result
   current_index ← starting_index + number_returned
   requested_count ← requested_count ← number_returned
   last_update_id ← update_id
    while requested_count > 0 do
       <partial_result, number_returned, total_matches,
           update_id> ← browse(current_index, requested_count)
              current_index ← current_index + number_returned
              requested_count ← requested_count - number_returned
              if last_update_id = update_id then
                 result ← result + partial_result
             else
                 result partial_result
                 last_update_id ← update_id
       return result
```

It can be easily recognized, by one skilled in the art, that the aforementioned method universal plug-and-play content retrieval may be performed and/or controlled by one or more computer programs. Such computer programs are typically executed by utilizing the computing resources of the device. The computer programs can be stored in a non-volatile memory, for example a flash memory or in a volatile memory (or otherwise a non-transitory computer readable medium), for example RAM and are executed by the processing unit. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

In addition, any combination of the appended claims in envisaged in the present application.

## Claims

1. A computer implemented method for universal plug-and-play content retrieval, the method comprising the steps of:
∘ addressing a media server, the media server comprising content items for sharing (200);
∘ receiving, from the media server, information regarding content items count available for retrieval (202);
∘ dividing the content items count available for retrieval into non-overlapping, sequential subranges of items; and
∘ iteratively retrieving (203) all of the non-overlapping, sequential subranges of content items starting from the subrange located at the end of a list of media server's content items according to such an order that each new content item, added to the list of media server's content items, appears at the end of that list.

2. The method according to claim 1 **characterized in that** the sorting is executed by means of a unique content item identifier, the identifier being automatically incremented with addition of a content item to the database.

3. The method according to claim 1 **characterized in that** the method further comprises a step of merging the results of the iteratively retrieved the non-overlapping, sequential subranges.

4. The method according to claim 1 **characterized in that** during iteratively retrieving the non-overlapping, sequential subranges, retrieving update notification (204) from the media server.

5. The method according to claim 4 **characterized in that** the method further comprises a step of merging (205) the results of the iteratively retrieved the non-overlapping, sequential subranges and update notifications retrieved from the media server.

6. A computer program comprising program code means for performing all the steps of the method according to claim 1 when said program is run on a computer.

7. A computer readable medium storing computer-executable instructions performing all the steps of the method according to claim 1 when executed on a computer.

## Patentansprüche

1. Computerimplementiertes Verfahren für ein universelles Plug-and-Play-Inhalteerhalten, wobei das Verfahren die Schritte umfasst:
- Adressieren eines Medien-Servers, wobei der Medien-Server Inhalteelemente zum Teilen (200) umfasst;
- Empfangen von Informationen betreffend Inhalteelemente, welche als verfügbar zum Erhalten (202) zählen, von dem Medien-Server;
- Aufteilen der Inhalteelemente, welche als verfügbar zum Erhalten zählen, in nicht-überlappende, sequentielle Unterbereiche von Elementen; und
- iteratives Erhalten (203) von allen der nicht-überlappenden, sequentiellen Unterbereiche von Inhalteelementen, beginnend von dem Unterbereich, welcher sich an dem Ende einer Liste von Inhalteelementen des Medien-Servers befindet, gemäß einer derartigen Ordnung, dass jedes neue Inhalteelement, welches zu der Liste von Inhalteelementen des Medien-Servers hinzugefügt wird, an dem Ende dieser Liste erscheint.

2. Verfahren nach Anspruch 1, **dadurch gekennzeichnet, dass** die Sortierung mittels einer eindeutigen Inhalteelement-Kennung durchgeführt wird, wobei die Kennung automatisch bei einer Hinzufügung eines Inhalteelements zu der Datenbank inkrementiert wird.

3. Verfahren nach Anspruch 1, **dadurch gekennzeichnet, dass** das Verfahren ferner einen Schritt eines Zusammenfügens der Ergebnisse des iterativen Erhaltens der nicht-überlappenden, sequentiellen Unterbereiche umfasst.

4. Verfahren nach Anspruch 1, **dadurch gekennzeichnet, dass** während des iterativen Erhaltens der nicht-überlappenden, sequentiellen Unterbereiche eine Aktualisierungs-Benachrichtigung (204) von dem Medien-Server erhalten wird.

5. Verfahren nach Anspruch 4, **dadurch gekennzeichnet, dass** das Verfahren ferner einen Schritt eines Zusammenfügens (205) der Ergebnisse des iterativen Erhaltens der nicht-überlappenden, sequentiellen Unterbereiche und von dem Medien-Server erhaltenen Aktualisierungs-Benachrichtigungen umfasst.

6. Computerprogramm, umfassend Programmcode-Mittel zum Durchführen aller der Schritte des Verfahrens nach Anspruch 1, wenn das Programm auf einem Computer läuft.

7. Computerlesbares Medium, welches darauf computerausführbare Anweisungen speichert, welche alle die Schritte des Verfahrens nach Anspruch 1 durchführen, wenn sie auf einem Computer ausgeführt werden.

## Revendications

1. Procédé mis en oeuvre par ordinateur pour la récupération d'un contenu prêt à l'emploi universel, le procédé comprend les étapes de :
- l'adressage d'un serveur multimédia, le serveur multimédia comprenant des éléments de contenu à partager (200) ;
- la réception, depuis le serveur multimédia, d'informations relatives à un compte d'éléments de contenu disponible pour la récupération (202) ;
- la division du compte d'éléments de contenu disponible pour la récupération en des sous-plages séquentielles d'éléments ne se chevauchant pas ; et
- la récupération itérative (203) de toutes les sous-plages séquentielles d'éléments de contenu ne se chevauchant pas en partant de la sous-plage située à la fin d'une liste d'éléments de contenu du serveur multimédia selon un ordre tel que chaque nouvel élément de contenu, ajouté à la liste d'éléments de contenu du serveur multimédia, apparaît à la fin de cette liste.

2. Procédé selon la revendication 1, **caractérisé en ce que** le tri est exécuté au moyen d'un identifiant unique d'élément de contenu, l'identifiant étant automatiquement incrémenté par l'addition d'un élément de contenu à la base de données.

3. Procédé selon la revendication 1, **caractérisé en ce que** le procédé comprend en outre une étape de fusion des résultats des sous-plages séquentielles ne se chevauchant pas récupérées itérativement.

4. Procédé selon la revendication 1, **caractérisé par**, durant la récupération itérative des sous-plages séquentielles ne se chevauchant pas, une récupération de notification de mise à jour (204) depuis le serveur multimédia.

5. Procédé selon la revendication 4, **caractérisé en ce que** le procédé comprend en outre une étape de fusion (205) des résultats des sous-plages séquentielles ne se chevauchant pas récupérées itérativement et des notifications de mise à jour récupérées depuis le serveur multimédia.

6. Programme d'ordinateur comprenant un moyen de code de programme pour réaliser toutes les étapes du procédé selon la revendication 1 lorsque ledit programme est exécuté sur un ordinateur.

7. Support lisible par ordinateur stockant des instructions exécutables par ordinateur réalisant toutes les étapes du procédé selon la revendication 1 lorsqu'elles sont exécutées sur un ordinateur.
